**Europäisches Patentamt**

**European Patent Office**

**Office européen des brevets**

(19)

(11) Numéro de publication : **0 047 701**
**B1**

(12)

# FASCICULE DE BREVET EUROPÉEN

(45) Date de publication du fascicule du brevet :
02.05.84

(51) Int. Cl.³ : **C 04 B 43/02**

(21) Numéro de dépôt : **81401380.1**

(22) Date de dépôt : **04.09.81**

(54) **Procédé de fabrication d'un matériau de protection thermique, notamment pour éléments d'engin et matériau ainsi obtenu.**

(30) Priorité : **05.09.80 FR 8019208**

(43) Date de publication de la demande :
**17.03.82 Bulletin 82/11**

(45) Mention de la délivrance du brevet :
**02.05.84 Bulletin 84/18**

(84) Etats contractants désignés :
**DE FR GB IT NL**

(56) Documents cités :
**DE-A- 2 311 816**
**DE-A- 2 756 848**
**DE-B- 1 048 531**

(73) Titulaire : **SOCIETE NATIONALE INDUSTRIELLE AEROSPATIALE**
**37 boulevard de Montmorency**
**F-75016 Paris Cedex 16 (FR)**

(72) Inventeur : **Gabdin, Michel**
**16 Les maisons du Verly rue du Croustêt**
**F-33700 Merignac (FR)**
Inventeur : **Pastureau, Nicole**
**"Grand Gueynard" Gaurlaguet**
**F-33240 Saint-André-de-Cubzac (FR)**

(74) Mandataire : **Casanova, André et al**
**CABINET ARMENGAUD JEUNE CASANOVA, AKERMAN, LEPEUDRY 23 boulevard de Strasbourg**
**F-75010 Paris (FR)**

Jouve, 18, rue St-Denis, 75001 Paris, France

**Procédé de fabrication d'un matériau de protection thermique, notamment pour éléments d'engin et matériau ainsi obtenu**

La présente invention concerne un procédé de fabrication d'un matériau de protection thermique susceptible de supporter d'importants chocs thermiques ainsi que des températures élevées, et utilisable notamment pour des éléments d'engin, ce matériau étant constitué d'un substrat de fibres minérales et d'une matrice à base de liants minéraux et/ou organiques, l'ensemble ayant subi un traitement de renforcement par une résine.

Les équipements d'un étage propulsif d'engin et de certains éléments de la jupe arrière de cet étage peuvent être munis, pour leur protection thermique, de pièces en forme réalisées à partir d'un substrat de faible densité en fibres minérales rigidifié par une matrice constituée soit de liants minéraux seuls, soit de liants minéraux associés à des liants organiques ou à des résines. Ces pièces doivent être capables de supporter des chocs thermiques très importants ainsi que des températures élevées, qui peuvent être de l'ordre de 1 600 °C.

Le formage du substrat de fibres minérales peut être réalisé par la technique du moulage par aspiration des fibres mises en suspension dans un bain contenant un liant minéral, un liant organique et une dispersion de résine en poudre, ou encore par drapage sur poinçon d'un matelas de fibres humidifiées par des liants. On a constaté que les pièces de protection thermique fabriquées à partir de ces techniques présentaient d'une part une fiabilité incompatible avec des opérations de montage et des manipulations sur engin et, d'autre part, une structure hétérogène et très lâche due à une mauvaise répartition des fibres et des liants, préjudiciable à la tenue de ces pièces.

Pour supprimer ces inconvénients, on a envisagé de renforcer des pièces en matériaux de faible densité, soit par des liants minéraux, soit par une résine. Le premier type de renforcement s'est avéré d'une efficacité très médiocre. En effet, comme selon les techniques connues on est amené à utiliser une proportion importante de liants minéraux, de l'ordre de 20 à 30 % en masse dans le produit fini, on provoque ainsi l'obturation partielle de nombreuses porosités du matériau fibreux par de fines poussières minérales non adhésives. Or cette perte de porosité est préjudiciable au comportement des pièces ainsi renforcées, lorsqu'elles sont par exemple soumises dans leur utilisation aux effets de surpression-décompression de la séparation inter-étage d'un engin ou de la chasse d'un missile.

Par ailleurs, le document DE-B-1 048 531 divulgue un procédé de fabrication de panneaux en plâtre comprenant des fibres de verre et du plâtre en tant que liant minéral, selon lequel les panneaux déjà formés sont soumis à une imprégnation ultérieure avec une résine synthétique pour améliorer leurs propriétés.

D'autre part, le document DE-A-2 311 816 décrit un procédé de fabrication de pièces en matériau isolant thermique réfractaire, consistant à mélanger dans un liquide approprié des fibres minérales réfractaires (par exemple des fibres de silice ou alumino-siliceuses) et un liant minéral tel que de la silice colloïdale, à mettre en forme le mélange, à sécher les pièces crues ainsi obtenues puis à les tremper dans un liant minéral pouvant être différent du premier et à les sécher une seconde fois.

Mais les produits obtenus par la mise en œuvre de ces procédés présentent dans l'application particulière qui est mentionnée ci-dessus, les mêmes inconvénients que ceux mentionnés précédemment.

Ce type de renforcement par des liants minéraux a donc été abandonné au profit du renforcement par une résine organique.

Les techniques connues dans ce domaine consistent, dans la perspective de la réduction du cycle de fabrication et donc du coût de celle-ci, à introduire la résine organique dans la solution aqueuse contenant les fibres et les liants au moment du formage du substrat. On s'est toutefois aperçu que cette résine en solution avait tendance à migrer en surface pendant le séchage des pièces fibreuses et formait ainsi des croûtes préjudiciables à leur utilisation.

Le problème se posait donc de remédier à ces différents inconvénients en améliorant les caractéristiques thermiques des matériaux envisagés.

La Demanderesse a résolu ce problème par la mise au point d'un procédé de fabrication d'un matériau de protection thermique ou d'une pièce de protection thermique comprenant un substrat, formé de fibres minérales rigidifiées par au moins un liant minéral et/ou un liant organique, et une résine de renforcement, caractérisé en ce qu'on trempe dans une solution de ladite résine de renforcement le substrat déjà formé. Cette résine ou précurseur de résine de renforcement peut être ensuite polymérisée *in situ*.

Pour obtenir des résultats particulièrement satisfaisants il est souhaitable d'utiliser des fibres minérales offrant un diamètre compris entre 2 et 15 micromètres et une longueur inférieure à 400 micromètres pour au moins 75 % d'entre elles. Il est en outre souhaitable pour obtenir un matériau ayant une bonne tenue au choc thermique, que le liant utilisé comporte au moins un liant minéral, tel que de la silice colloïdale. De l'amidon cationique peut être utilisé avantageusement comme liant organique.

Cette méthode de fabrication souple permet d'obtenir aussi bien un matériau en plaques que des pièces de forme particulière présentant une surface externe légèrement granuleuse résistant à la pression du doigt et donc manipulables sans précautions particulières ; la structure ainsi obtenue est homogène, présentant une texture très serrée composée de strates parallèles. Les pièces réalisées sont exemptes de croûtes, résistent au délaminage et à l'éclatement sous les effets de surpression-dépression gazeuse et présentent en outre une bonne tenue mécanique réelle et une excellente usinabilité.

A titre de résine de renforcement on utilise de préférence une résine formo-phénolique présentant un extrait sec d'environ 70 % ; une telle résine utilisée selon le procédé de l'invention permet de réaliser un matériau de protection thermique pouvant supporter des chocs thermiques sévères de l'ordre de 1 600 °C ; bien entendu on peut également utiliser d'autres types de résines présentant des propriétés analogues et telles que des résines choisies par exemple parmi les polyimides.

De préférence, la quantité de résine formophénolique entrant dans le bain d'imprégnation représente 8 à 33 % de la masse du matériau ou de la pièce renforcée, et la durée d'imprégnation de la pièce à renforcer dans la solution de résine formo-phénolique est comprise entre 15 et 30 mn. Comme les résines disponibles dans le commerce ont une teneur en extrait sec largement supérieur, par exemple de l'ordre de 70 %, il est nécessaire de les diuler avant de procéder au trempage du substrat. Pour cela, il y a lieu de choisir un diluant qui conduise à une bonne imprégnation et évite la migration de la résine vers les faces du matériau ou de la pièce formée lors du séchage ou de leur cuisson. La Demanderesse a constaté que l'acétone donnait des résultats particulièrement intéressants en tant que diluant.

L'utilisation de résine formo-phénolique, si elle présente d'indéniables avantages au plan des caractéristiques d'utilisation du matériau final impose quelques contraintes de mise en œuvre, en particulier au niveau du cycle de polymérisation qui est très long. Il est intéressant, pour limiter les coûts de fabrication, d'utiliser des matériels d'imprégnation et de polymérisation classiques tels que des bacs de trempage à l'air libre et des étuves de polymérisation ventilées à pression ambiante.

Pour obtenir une polymérisation correcte de cette résine, il est nécessaire d'opérer en deux paliers de température au moins ; l'un se situe entre 60 et 90 °C environ et correspond à la prégélification et au départ de la majorité des substances volatiles ; l'autre, aux environs de 170 °C, correspond à la polymérisation complète de la résine.

Ainsi qu'on l'a mentionné ci-dessus, on tend à obtenir un matériau présentant une teneur globale en résine de l'ordre de 30 ± 3 %. A cette fin, on peut réaliser plusieurs séries d'imprégnations dans des bains de résine et de diluant, à proportions variables, afin d'obtenir une corrélation entre la teneur en résine du bain et la teneur globale en résine du produit renforcé. De tels essais permettent de déterminer les proportions du mélange d'imprégnation donnant la teneur en résine désirée dans le matériau renforcé. On constate ainsi que, pour un substrat de type donné, la teneur optimale en résine dans le bain d'imprégnation dépend en général de l'épaisseur de la pièce considérée.

Ainsi, pour un substrat constitué de fibres minérales telles que des fibres de silice rigidifiées par une matrice formée par un liant minéral tel qu'une silice colloïdale et par un liant organique tel que l'amidon, le bain d'imprégnation, dans le cas où on utilise une résine formo-phénolique diluée à l'acétone, contiendra 18 % environ de résine pour des pièces de 12 mm d'épaisseur et 20 % environ de résine pour des pièces de 16 mm d'épaisseur.

Dans la perspective d'améliorer la rentabilité du procédé, on a examiné les paramètres de polymérisation, et en particulier les paramètres de séchage. En ce qui concerne la durée de celui-ci à température ambiante, on a constaté que, pour une résine formo-phénolique, environ 50 % de la masse de solution absorbée par le matériau s'évapore au bout d'une heure et qu'au bout de 3 heures l'évaporation se stabilise aux alentours de 80 %. On peut donc affirmer que pour ce type de résine un séchage à température ambiante supérieure à 3 heures n'accroît pas les départs des volatils de la solution d'imprégnation. Comptetenu du fait par ailleurs qu'il y a lieu d'éviter toutes les sources d'hétérogénéité de répartition de la résine, il est indiqué de réduire le temps de séchage à température ambiante à la durée strictement nécessaire soit 3 heures. En ce qui concerne la durée du séchage au palier d'environ 90 °C, des mesures de flexion, dureté superficielle, densité, temps de·perçage aux effets de flammes n'ont pas fait apparaître de différences sensibles entre les résultats des essais. La durée de séchage à ce palier de 90 °C environ, qui a été finalement adopté par la Demanderesse, est de 3 heures environ. En ce qui concerne maintenant la durée optimale de polymérisation en étuve ventilée, à une température d'environ 170 °C, on a constaté qu'une durée de 12 heures environ assurait une bonne homogénéité de polymérisation au sein des pièces, même si celles-ci présentent une forme complexe.

Par ailleurs, on a constaté que lorsque l'on retirait le matériau du mélange d'imprégnation, une quantité importante de ce mélange s'en allait par égouttage. Ainsi, une pièce imprégnée par trempage dans un mélange à 20 % de résine formo-phénolique dans l'acétone et retirée verticalement du bain, puis subissant tout le cycle de polymérisation en position verticale, possède, en finale, la répartition de résine suivante :

| — partie supérieure | 26 % |
| — milieu | 30 % |
| — partie inférieure | 42 % |

En conséquence, si l'on veut obtenir une pièce de caractéristiques homogènes, il est nécessaire de retourner en permanence les pièces imprégnées pendant toute la durée du séchage.

On obtient selon le procédé de l'invention un matériau offrant une densité de 0,26 à 0,31, un taux de résine de 27 à 33 % et un coefficient de conductibilité thermique compris entre 0,15 et 0,2 W/m °C à 200 °C ainsi qu'une résistance à la rupture en flexion de l'ordre de 2 à 5,5 MPa.

Les exemples suivant illustrent l'invention sans toutefois en limiter la portée.

Exemple 1

Selon cet exemple, on réalise une pièce de protection thermique à faible densité et renforcée, à partir d'un substrat composé de fibres de silice en tant que fibres minérales, rigidifiées par de la silice colloïdale en tant que liant minéral et par de l'amidon cationique en tant que liant organique. Pour réaliser cette pièce, on utilise une quantité de 180 g de fibres de silice que l'on fait tremper dans 5 litres d'eau. On hache ensuite ces fibres dans leur bain avec un dispositif permettant d'obtenir une longueur de fibres inférieure à 400 micromètres, gage d'une bonne tenue mécanique de la pièce renforcée.

On ajoute au bain précédent environ 4 litres d'eau. On ajoute ensuite 33 g d'une dispersion en milieu alcalin de silice colloïdale, ce qui correspond à la quantité de départ de fibres de silice. On brasse le mélange avant de lui ajouter environ 450 grammes d'une solution aqueuse d'amidon cationique à 3 %. On brasse le mélange fibres, silice, amidon, eau afin d'obtenir une bonne homogénéité et un enrobage satisfaisant des fibres, par légère agitation. On plonge ensuite dans le bain l'appareillage d'aspiration destiné à mouler les pièces, à savoir un tamis filtrant recouvrant une structure perforée mince, en forme, reliée à la cuve à dépression. On sèche, par de l'air chaud, le gâteau fibreux sur le tamis.

Par ailleurs, on prépare le bain de renforcement à partir d'une solution de résine formo-phénolique à 18-20 % dans l'acétone, en fonction de l'épaisseur de la pièce à renforcer. Cette pièce est trempée pendant 30 mn puis retirée du bain.

La pièce est ensuite séchée à température ambiante pendant 3 heures en étant soumise en permanence à un mouvement de rotation lent et régulier de façon que l'acétone s'évapore. Elle est ensuite séchée en étuve ventilée à 90 °C pendant 3 heures environ, de façon à obtenir l'élimination du reliquat de solvant. Enfin la pièce est polymérisée en étuve ventilée à 170 °C pendant 12 heures.

La pièce ainsi obtenue possède une masse volumique de 290 kg/m³, un taux de résine de 30 %, une résistance à rupture en flexion de 5 MPa et un coefficient de conductibilité thermique de 0,15 W/m °C à 200 °C.

Exemple 2

Selon cet exemple, on renforce par le procédé suivant l'invention des pièces en matériau réfractaire à base de fibres alumino-siliceuses et plus précisément de fibres FIBRAL (nom de la marque de la Sté SEPR), ces fibres étant liées par de la silice colloïdale en tant que liant minéral et par de l'amidon cationique en tant que liant organique. Ce renforcement s'effectue suivant le mode opératoire décrit pour l'exemple 1 ci-dessus, l'opération de trempage se faisant toutefois dans une solution à 20-22 % de résine formo-phénolique suivant l'épaisseur des pièces.

Le matériau ainsi obtenu possède une masse volumique de 310 kg/m³, un taux de résine de 30 %, une résistance en flexion de 5,5 MPa et un coefficient de conductibilité thermique de 0,15 W/m °C à 200 °C.

**Revendications**

1. Procédé de fabrication d'un matériau de protection thermique ou d'une pièce de protection thermique capable de supporter des chocs thermiques très importants ainsi que des températures élevées, pouvant être de l'ordre de 1 600 °C, comprenant un substrat, formé de fibres minérales rigidifiées par au moins un liant minéral et/ou un liant organique, et une résine de renforcement, caractérisé en ce qu'on trempe dans une solution de ladite résine de renforcement le substrat déjà formé.

2. Procédé selon la revendication 1, caractérisé en ce qu'on utilise comme résine de renforcement une résine de type formo-phénolique.

3. Procédé selon la revendication 2, caractérisé en ce que la quantité de résine formo-phénolique entrant dans le bain d'imprégnation représente 8 à 33 % de la masse du matériau ou de la pièce renforcée.

4. Procédé selon la revendiation 2 ou 3, caractérisé en ce que la durée d'imprégnation de la pièce à renforcer dans la solution de résine formo-phénolique est comprise entre 15 et 30 mn.

5. Procédé selon l'une quelconque des revendications 2 à 4, caractérisé en ce que le solvant utilisé pour la résine formo-phénolique est l'acétone.

6. Procédé selon l'une quelconque des revendications 2 à 5, caractérisé en ce que le séchage du matériau ou de la pièce de protection thermique s'effectue d'abord à température ambiante pendant 3 heures environ, avec mouvement de rotation continue, puis en étuve ventilée à 90 °C pendant également environ 3 heures.

7. Procédé selon l'une quelconque des revendications 1 à 6, caractérisé en ce que les fibres minérales utilisées ont un diamètre compris entre 2 et 15 micromètres.

8. Procédé selon l'une quelconque des revendications 1 à 7, caractérisé en ce que les fibres minérales utilisées ont une longueur inférieure à 400 micromètres, pour au moins 75 % d'entre elles.

9. Matériau obtenu par un procédé selon l'une quelconque des revendications 1 à 8, caractérisé en ce qu'il offre une densité de 0,26 à 0,31, un taux de résine de 27 à 33 % et un coefficient de conductibilité thermique compris entre 0,15 et 0,2 W/m °C à 200 °C, ainsi qu'une résistance à la rupture en flexion de 2 à 5,5 MPa.

**Claims**

1. Process for the manufacture of a thermal protective material or a thermal protective member capable of withstanding very great thermal shocks and also elevated temperatures, which may be of the order of 1 600 °C, and comprising a substrate, made of mineral fibres stiffened by at least one mineral binding agent and/or one organic binding agent, and a reinforcing resin, characterised in that the preformed substrate is soaked in a solution of the said reinforcing resin.

2. Process according to claim 1, characterised in that a resin of the phenol formaldehyde type is used as the reinforcing resin.

3. Process according to claim 2, characterised in that the quantity of phenol formaldehyde resin entering the impregnation bath represents from 8 to 33 % of the weight of the material or of the reinforced member.

4. Process according to claim 2 or 3, characterised in that the duration of impregnation of the member to be reinforced in the phenol formaldehyde resin solution is between 15 and 30 minutes.

5. Process according to any one of claims 2 to 4, characterised in that the solvent used for the phenol formaldehyde resin is acetone.

6. Process according to any one of claims 2 to 5, characterised in that the thermal protective material or member is dried first at ambient temperature for approximately 3 hours, with continuous rotational movement, and then in a ventilated oven at 90 °C, also for approximately 3 hours.

7. Process according to any one of claims 1 to 6, characterised in that the mineral fibres used have a diameter of between 2 and 15 micrometres.

8. Process according to any one of claims 1 to 7, characterised in that at least 75 % of the mineral fibres used are less than 400 micrometres long.

9. Material obtained by a process according to any one of claims 1 to 8, characterised in that it has a density of from 0.26 to 0.31, a resin content of from 27 to 33 % and a coefficient of thermal conductivity of between 0.15 and 0.2 W/m °C at 200 °C, and also an ultimate bending strength of from 2 to 5.5 MPa.

**Ansprüche**

1. Verfahren zur Herstellung eines Wärmeschutzmaterials oder eines Wärmeschutzkörpers, der in der Lage ist, sehr starke Wärmeschocks sowie hohe Temperaturen in der Größenordnung von 1 600 °C auszuhalten, wobei dieses Material oder dieser Körper aus einem Substrat, das aus mittels mindestens eines mineralischen und/oder eines organischen Bindemittels verfestigten mineralischen Fasern gebildet ist, und aus einem Verstärkungsharz besteht, dadurch gekennzeichnet, daß man das vorgefertigte Substrat in eine Lösung dieses Verstärkungsharzes taucht.

2. Verfahren nach Anspruch 1, dadurch gekennzeichnet, daß man als das Verstärkungsharz ein Formaldehyd/Phenol-Harz verwendet.

3. Verfahren nach Anspruch 2, dadurch gekennzeichnet, daß die Menge des in dem Imprägnierungsbad eindringenden Formaldehyd/Phenolharzes 8 bis 33 % der Masse des zu verstärkenden Materials oder Körpers ausmacht.

4. Verfahren nach einem der Ansprüche 2 oder 3, dadurch gekennzeichnet, daß die Zeitdauer der Imprägnierung des zu verstärkenden Körpers mit der Lösung des Formaldehyd-Phenolharzes zwischen 15 und 30 Minuten liegt.

5. Verfahren nach einem der Ansprüche 2 bis 4, dadurch gekennzeichnet, daß man als Lösungsmittel für das Formaldehyd/Phenol-Harz Aceton verwendet.

6. Verfahren nach einem der Ansprüche 2 bis 5, dadurch gekennzeichnet, daß das Trocknen des Wärmeschutzmaterials oder -körpers zunächst bei Umgebungstemperatur während etwa 3 Stunden unter ständigem Umdrehen, danach in einem belüfteten Trockenschrank bei 90 °C, ebenfalls während etwa 3 Stunden stattfindet.

7. Verfahren nach einem der Ansprüche 1 bis 6, dadurch gekennzeichnet, daß die verwendeten mineralischen Fasern einen Durchmesser zwischen 2 und 15 Mikrometern aufweisen.

8. Verfahren nach einem der Ansprüche 1 bis 7, dadurch gekennzeichnet, daß die verwendeten mineralischen Fasern zu mindestens 75 % eine Länge unter 400 Mikrometern aufweisen.

9. Material, das nach einem der Ansprüche 1 bis 8 erhalten worden ist, dadurch gekennzeichnet, daß es eine Dichte von 0,26 bis 0,31, einen Harzgehalt von 27 bis 33 % und einen Wärmeleitfähigkeitskoeffizienten zwischen 0,15 und 0,2 W/m °C bei 200 °C, sowie eine Umbruchfestigkeit von 2 bis 5,5 MPa aufweist.